# EUROPÄISCHE PATENTSCHRIFT

(11) **EP 3 999 392 B1**
(45) Veröffentlichungstag und Bekanntmachung des Hinweises auf die Patenterteilung: **09.08.2023**
(21) Anmeldenummer: 20761513.9
(22) Anmeldetag: 26.08.2020
(51) Int. Cl.: B61D 27/00

(54) **KLIMAANLAGE FÜR EIN FAHRZEUG (ÜBERDRUCK IM E-KASTEN)**
CLIMATE CONTROL FOR A VEHICLE (OVERPRESSURE IN THE ELECTRICAL BOX)
SYSTÈME DE CLIMATISATION POUR UN VÉHICULE (SURPRESSION DANS LA BOÎTE ÉLECTRIQUE)

(30) Priorität: 27.08.2019 DE 202019104696 U
(43) Veröffentlichungstag der Anmeldung: 25.05.2022
(73) Patentinhaber: Faiveley Transport Leipzig GmbH & Co. KG, 04435 Schkeuditz (DE)
(72) Erfinder: BOECK, Lutz, 04435 Schkeuditz (DE); HOFFMANN, Erik, 04451 Borsdorf (DE); POSER, Steffen, 04509 Krostitz (DE); FISCHER, Kai, 04178 Leipzig (DE)
(74) Vertreter: Laufhütte, Dieter
(86) Internationale Anmeldenummer: PCT/DE2020/100717
(87) Internationale Veröffentlichungsnummer: WO 2021/037308

(56) Entgegenhaltungen:
- EP-A1- 1 010 599
- WO-A1-2013/037335
- DE-A1- 4 405 377
- DE-A1- 19 824 461
- DE-B3-102009 056 968

## Beschreibung

Diese vorliegende Anmeldung beansprucht die Priorität der internationalen Patentanmeldung Nr. PCT/DE2020/100717 (eingereicht am 26. August 2020), welche wiederum die Priorität der deutschen Patentanmeldung Nr. 20 2019 104 696.1 (eingereicht am 27. August 2019) beansprucht. Sämtliche Offenbarungen besagter Anmeldungen werden hier durch Verweis berücksichtigt.

### HINTERGRUND

### Technisches Gebiet

Die Erfindung betrifft eine Klimaanlage für ein Fahrzeug wobei die Klimaanlage für brennbare Kältemittel geeignet und als ein kompaktes Gerät für eine Montage auf dem Fahrzeugdach ausgestaltet ist und mindestens Gerätesektionen für eine Luftbehandlung, eine Verdichter-Verflüssiger-Einheit und einen elektrischen Schaltkasten (E-Kasten) sowie optional Gerätesektionen für Fortluft und/oder Schalldämpfer aufweist.

### Stand der Technik

Für Klimaanlagen in Fahrzeugen sind verschiedene Kältemittel bekannt, wobei für die synthetischen Kältemittel die Verwendung unter ökologischen Aspekten problematisch ist. So wurde für Kraftfahrzeuge und für Schienenfahrzeuge das Kältemittel R134a sehr umfangreich eingesetzt. Allerdings wirkt dieses Kältemittel bei einem Austritt in die Atmosphäre als Treibhausgas. Deshalb wurde der Einsatz von Kältemittel R134afür PKW-Neufahrzeuge in der Europäischen Union zum 01.01.2017 beendet.

Als Alternative für R134a wird nunmehr überwiegend das Kältemittel R1234yf verwendet, das einen wesentlich geringeren Treibhauseffekt besitzt, allerdings brennbar ist und als A2L- Kältemittel klassifiziert ist. Doch auch der Einsatz dieses Kältemittels wird inzwischen von Fachleuten kritisiert. So entsteht bei der Freisetzung in Verbindung mit Temperaturen 〉 250°C hoch giftige Flusssäure (HF) und in der Atmosphäre als Abbauprodukt persistente Trifluoressigsäure (TFA), die sich im Wasser anreichert. Aufgrund der damit verbundenen Risiken wird grundsätzlich auch ein Verzicht auf HFO- Kältemittel wie R1234yf angestrebt.

Eine Alternative dazu ist die Verwendung von Kohlenstoffdioxid (R744) als ein natürliches Kältemittel. Allerdings ergibt die Anwendung von R744 aufgrund der hohen Systemdrücke im Vergleich zu anderen Kältemitteln eine relativ aufwändige Gerätetechnik. Auch ist bei hohen Umgebungstemperaturen eine signifikante Verschlechterung der Leistungszahl (COP) zu verzeichnen und daher ein deutlicher Anstieg des Energiebedarfs für die Klimatisierung. Außerdem kommt es bei steigenden Umgebungstemperaturen zu einer starken Reduktion der Kälteleistung, dem durch eine entsprechend größere Dimensionierung der Komponenten begegnet werden kann.

Somit ist offenkundig, dass die bisher eingesetzten Kältemittel letztlich einen Kompromiss zwischen unterschiedlichen funktionellen, umweltrelevanten und sicherheitstechnischen Anforderungen darstellen. Es besteht ein Bedarf an der Nutzung von Kältemitteln für Fahrzeugklimaanlagen, auch für Schienenfahrzeuge, die ökologisch unkritisch beim Austritt an die Atmosphäre sind, eine hohe Energieeffizienz über den gesamten Arbeitsbereich aufweisen und den Wissens- und Erfahrungsstand der bisher verwendeten Kaltdampftechnologie weiternutzen können. Dabei sind diese Anlagen bei Schienenfahrzeugen überwiegend als kompakte Anlagen für das Fahrzeugdach konstruiert.

Derartige Klimakompaktgeräte weisen unabhängig von ihrer jeweils konkreten Konstruktion typischerweise die Gerätesektionen Luftbehandlung und Verdichter-Verflüssiger-Einheit auf, und können optional die Gerätesektionen Fortluft, elektrischer Schaltkasten und/oder Schalldämpfer beinhalten.

Als Lösung der oben beschriebenen Anforderungen sind brennbare Kohlenwasserstoffe wie z.B. Propan (R290), Propylen (R1270) oder Isobutan (R600a) als alternative Kältemittel interessant. Diese Kältemittel sind bei direktverdampfenden Anlagen mit begrenzten Füllmengen (〈150g bzw. (500g) im stationären Bereich weit verbreitetet. Bei der Notwendigkeit größerer Füllmengen zur Erzeugung größerer Kälteleistungen werden aufgrund ihrer Brennbarkeit vorzugsweise indirekte Systeme ausgeführt.

Für eine Klimatisierung von Fahrzeugen bzw. Schienenfahrzeugen werden brennbare Kältemittel aufgrund der damit verbundenen Explosions- und Brandgefahr bisher kaum eingesetzt - weder als direkt noch als indirekt verdampfendes System. Bei einem indirekt verdampfenden System wird das o.g. Risiko reduziert, indem die Klimaanlage mit Sekundärkreislaufsystemen ausgeführt wird. Dabei wird in einem Primärkreislauf, der außerhalb des Fahrzeuges angeordnet ist und damit keine direkte Verbindung zum Fahrzeuginnenraum aufweist, die benötigte Kälte- (bzw. Heiz-) Leistung unter Verwendung brennbarer Kältemittel in üblichen Kompressionskältekreisläufen bereitgestellt. Diese Kälteleistung wird durch Wärmeübertrager (vorzugsweise Platten-Wärmeübertrager) auf einen Sekundärkreislauf übertragen, der zum Beispiel als Solekreislauf mit Wasser-Glykol-Gemischen ausgeführt ist.

Eine diesbezügliche technische Lösung ist aus WO 2018 / 137 908 A1 bekannt. Demzufolge weist ein Fahrzeug, z. B. ein Schienenfahrzeug, einen primären Kältemittelkreislauf auf, der außerhalb vom Fahrzeug angeordnet und vom Fahrgastraum vollständig baulich getrennt ist. Ein sekundärer Kälteträgerkreislauf ist zumindest teilweise innerhalb des Schienenfahrzeuges angeordnet. Der Wärmeaustausch zwischen dem primären Kältemittelkreislauf und dem sekundären Kälteträgerkreislauf erfolgt durch einen Zwischenwärmetauscher, der unterflur im Außenbereich angeordnet ist. Dadurch wird der primäre Kältemittelkreislauf vollständig außerhalb vom Innenraum des Schienenfahrzeuges geführt. Durch diese Ausgestaltung sind die zu berücksichtigenden Sicherheitsbetrachtungen beim Einsatz brennbarer Stoffe im Wesentlichen für den Außenbereich durchzuführen, der Innenbereich kann als gleich sicher wie bei konventionellen Systemen angesetzt werden. Damit können auch solche Kältemittel verwendet werden, die aus sicherheitsrelevanten Aspekten bisher kaum zur Klimatisierung von Fahrgasträumen eingesetzt werden. Deshalb wird in WO 2018 / 137 908 A1 eine Verwendung brennbarer Kältemittel wie Propan vorgeschlagen, das unter funktionellen Aspekten gut als Kältemittel geeignet ist, wegen der oben erläuterten Probleme der Brand- und Explosionsgefahr bisher allerdings kaum verwendet wird.

Beim Betrachten des Standes der Technik gemäß WO 2018 / 137 908 A1 und ähnlicher Lösungsvorschläge ist zu erwarten, dass sich die Akzeptanz für eine Verwendung von brennbaren Kältemitteln in Klimaanlagen für Schienenfahrzeuge mittelfristig stark erhöhen wird. Dabei ist jedoch zu beachten, dass durch den indirekten Kreislauf energetische Nachteile aufgrund der thermischen Verluste im Zwischenwärmeübertrager und ein Mehrgewicht sowie die Notwendigkeit für zusätzlichen Bauraum bestehen bleiben. Für die umfassende Nutzung brennbarer Kältemittel wird daher ein direktverdampfendes System angestrebt, das diese Nachteile vermeidet. Um den Brand- und Explosionsschutz, auch bei möglichen Betriebsstörungen, mit hoher Sicherheit zu gewährleisten, sind daher weitere bauliche Maßnahmen an den Klimaanlagen von Schienenfahrzeugen ggf. erforderlich, die zu spezifischen Ausgestaltungen an verschiedenen Baugruppen führen.

Eine diesbezüglich sensible Baugruppe ist der elektrische Schaltkasten (E-Kasten) in einem Kompaktklimagerät. Ein derartiger E-Kasten ist üblicherweise als ein separater Bereich im Klimagerät mit Schnittstellen ausgestaltet und nimmt alle Komponenten auf, die zur Steuerung bzw. Kontrolle des Klimagerätes benötigt werden. Um eine Gefährdung zu vermeiden ist es dabei insbesondere bei einer Verwendung brennbarer Kältemittel notwendig, dass kein zündfähiges Gemisch in den E-Kasten eintreten darf. Dies kann grundsätzlich verhindert werden, indem im Innenraum ein Überdruck aufgebaut wird.

Ferner offenbart die die WO 2013/037335 A1 eine Klimaanlage für ein Fahrzeug, hier ein Schienenfahrzeug, wobei in einer auf dem Fahrzeugdach angeordneten Gerätewanne sämtliche für eine Klimatisierung des Fahrgastraumes notwendigen Bauteile, insbesondere Verdichter, Verflüssiger, Lüfter, Filter, Heizelemente, Sensorik und Steuerung baulich integriert sind und wobei diese mit einem Gehäuse umschlossene Gerätewanne in einem freien Bauraum auf dem Fahrzeugdach so angeordnet ist, dass sie einen Teil der Dachform innerhalb der Kontur des Schienenfahrzeuges ausbildet. Besagte Klimaanlage ist gleichwohl für brennbare Kältemittel geeignet, die einen als vollständig geschlossene Baugruppe ausgestalteten E-Kasten aufweist.

DE 10 2014 101 184 A1 betrifft einen elektrischen Schaltkasten, bei dem mit Lüftern ein Überdruck im Innenraum erzeugt wird, um das Einströmen schädlicher Partikel und dergleichen zu vermeiden. Allerdings ist diese Ausführung nicht für brennbare Kältemittel geeignet. Ebenso ist es bei Verwendung brennbarer Kältemittel nicht akzeptabel, dass die für den Überdruck notwendige Luft aus der unmittelbaren äußeren Umgebung des Klimagerätes abgesaugt wird, da hier das Risiko für eine Kontamination sehr hoch ist. Alternativ könnte dann ein sehr hoher Volumenstrom zugeführt werden, um eine entsprechende Verdünnung der eventuell kontaminierten Luft zu erreichen. Dies hat jedoch den Nachteil, dass eine wesentliche höhere Lüfterleistung benötigt wird und dass der sehr hohe Volumenstrom zusätzliche Verschmutzungen ergeben kann, die wiederum eine zusätzliche Filterung erfordern. Ferner offenbart die die WO 2013/037335 A1 eine Klimaanlage für ein Schienenfahrzeug, wobei in einer auf dem Fahrzeugdach angeordneten Gerätewanne sämtliche für eine Klimatisierung des Fahrgastraumes notwendigen Bauteile, insbesondere Verdichter, Verflüssiger, Lüfter, Filter, Heizelemente, Sensorik und Steuerung baulich integriert sind und wobei diese mit einem Gehäuse umschlossene Gerätewanne in einem freien Bauraum auf dem Fahrzeugdach so angeordnet ist, dass sie einen Teil der Dachform innerhalb der Kontur des Schienenfahrzeuges ausbildet. F

### Aufgabe der Erfindung

Aufgabe der Erfindung ist es daher, ein direktverdampfendes System zu realisieren, bei dem der elektrische Schaltkasten (E-Kasten) innerhalb eines Kompaktklimagerätes für ein Fahrzeug derart abgeschottet wird, dass diese Baugruppe bei relevanten Leckagen der kältemittelführenden Baugruppen nicht mit dem brennbaren Kältemittel in Kontakt kommen und damit in diesen Bereichen kein zündfähiges Gemisch auftreten kann. Konkret soll ein Einströmen von brennbarem Kältemittel infolge Leckagen in den E-Kasten verhindert werden.

Diese Aufgabe wird gelöst, indem der elektrische Schaltkasten / E-Kasten mit einer Baugruppe in Wirkverbindung steht, bei der Luft aus Bereichen außerhalb der kältemittelführenden Segmente oder des Außenbereiches der Klimaanlage derart in den E- Kasten geführt wird, dass ein Überdruck in einem dafür ausreichend geschlossenen E- Kasten erzeugbar ist, um eine Anreicherung von brennbarem Kältemittel zu vermeiden. Diese Baugruppe zur Zuführung von Luft in den E-Kasten ist als ein separater Ventilator ausgestaltet, mit dem Luft aus der Umgebung der Klimaanlage angesaugt wird und so ein Überdruck im E-Kasten erzeugbar ist. Alternativ ist diese Baugruppe zur Zuführung von Luft als eine Kanalstruktur ausgestaltet, die ausgehend vom Überdruckbereich der Zuluftstrecke des Luftbehandlungsgerätes der Klimaanlage einen Teilvolumenstrom der Zuluft in den E-Kasten führt. Weiterhin alternativ ist diese Baugruppe zur Zuführung von Luft als eine Kanalstruktur ausgestaltet, die ausgehend vom einem Überdruckanschluss eines mit einem Fortluftventilator ausgestatteten Fortluftkanals der Klimaanlage einen Teilvolumenstrom der Fortluft in den E-Kasten führt.

Unabhängig von der konkreten Ausführung ist die Baugruppe zur Zuführung von Luft aus Bereichen außerhalb kältemittelführender Segmente oder dem Außenbereich der Klimaanlage in den E-Kasten derart ausgestaltet, dass im E-Kasten ein Überdruck erzeugbar ist. Um dies zu erreichen, ist der E-Kasten als eine ausreichend geschlossene Baugruppe ausgestaltet. Alternativ kann der E-Kasten mit einer freien oder kanalisierten Abluftführung bis zur Abströmöffnung für eine gezielte Entlüftung und/oder Entwärmung der im E-Kasten installierten elektrischen Komponenten ausgestaltet sein.

Die Neuheit gegenüber dem bekannten Stand der Technik besteht demzufolge darin, dass der E-Kasten als eine geschlossene Box ausgeführt ist. Deshalb kann im Stillstand keine Kontamination mit einem zündfähigen Gemisch erfolgen kann. Der ohnehin vorhandene Lüfter im Klimagerät bzw. Fahrzeug übernimmt eine zusätzliche Funktion als Zulüfter bzw. Fortlüfter. Ebenso kann bei Bedarf auch ein separater Lüfter baulich integriert werden. Die Entnahme der Luft erfolgt aus einem Bereich im Klimagerät bzw. Fahrzeug mit einer nicht potentiell zündfähigen Atmosphäre, indem die Ansaugung der Luft aus Bereichen ohne kältemittelführende Teile erfolgt. Die Luftführung zum E-Kasten erfolgt mit einem separaten Kanal bzw. Kanalabschnitt und die Belüftung des E-Kastens stellt mindestens einen geringen Überdruck zur Umgebung sicher.

Mit der erfindungsgemäßen technischen Lösung wird die Akzeptanz für eine Verwendung von brennbaren Kältemitteln in Klimaanlagen für Fahrzeuge verbessert. Da es nunmehr möglich ist, den Brand- und Explosionsschutz am elektrischen Schaltkasten (E- Kasten) als einer diesbezüglich sensiblen Baugruppe auch bei einem Austritt brennbaren Kältemittels in den benachbarten Bereichen des Kompaktklimagerätes erheblich zu verbessern. Mit der dauerhaften Erzeugung eines Überdrucks im E-Kasten wird ein Einströmen brennbarer Kältemittel damit wirksam verhindert.

### Figurenbeschreibung

Nachfolgend wird ein Ausführungsbeispiel der Erfindung unter Bezugnahme auf die Zeichnungen näher erläutert. Es zeigen in jeweils stilisierter Darstellung:
Fig. 1 ein Klimakompaktgerät für ein Schienenfahrzeug in Draufsicht mit verschiedenen Varianten zur Anordnung der Sektionen und deren Zuordnung zum E-Kasten;
Fig. 2 einen E-Kasten mit Überdruck im Innenraum und verschiedenen Strömungsvarianten;
Fig. 3 die prinzipielle Anordnung eines E-Kastens als Segment eines Klimakompaktgerätes;
Fig. 4 eine ergänzende Ansicht zur Variante gemäß Fig. 3; und
Fig. 5 eine weitere ergänzende Ansicht zur Variante gemäß Fig. 3.

Die in der Zeichnung dargestellte Klimaanlage für ein Schienenfahrzeug ist als kompaktes Gerät für eine Montage auf dem Fahrzeugdach ausgestaltet und vorzugsweise für einen Betrieb mit brennbaren Kältemitteln der Kategorien A2, A2L und A3 vorgesehen, beispielsweise für R290. Es sind Baugruppen vorgesehen, mit denen im elektrischen Schaltkasten / E-Kasten ein Überdruck erzeugbar ist, um ein Einströmen des brennbaren Kältemittels in den E-Kasten zu vermeiden. Durch das entsprechende Ansaugen der benötigten Luft zum Aufbau eines definierten Überdruckes aus Bereichen außerhalb der kältemittelführenden Segmente oder des Außenbereiches wird gewährleistet, dass keine Anreicherung von brennbarem Kältemittel im E-Kasten bis zur Erreichung eines zündfähigen Gemisches stattfinden kann.

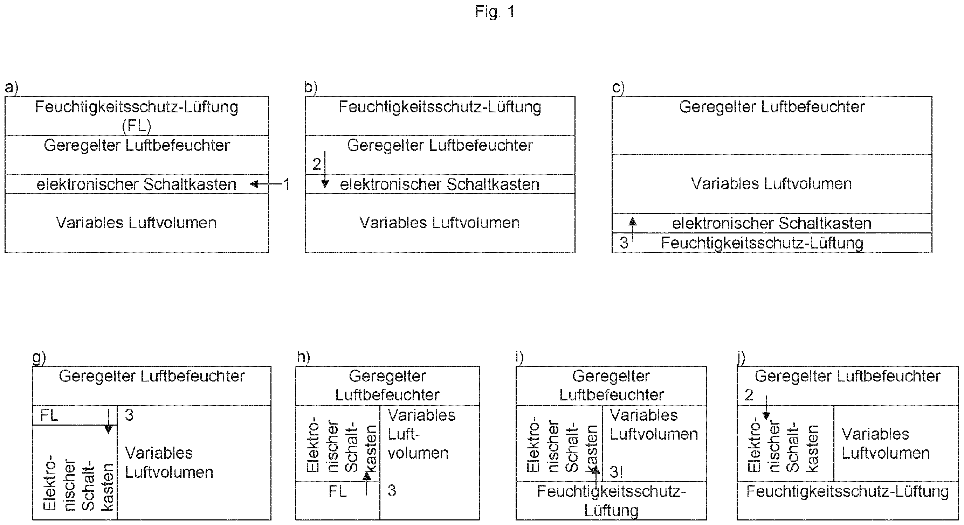

Aus Fig. 1 ist ein solches Klimakompaktgerät in Draufsicht mit verschiedenen Varianten zur Anordnung der Sektionen der Klimaanlage und deren Zuordnung zum E-Kasten ersichtlich.

Die Abbildung 1a) zeigt eine Überdruckschaffung durch Ansaugen von Umgebungsluft mit Hilfe eines separaten Ventilators, welcher ausschließlich dazu dient, einen Überdruck im E- Kasten zu erzeugen.

Die Abbildung 1b) zeigt eine Überdruckschaffung durch Kanalisierung vom Luftbehandlungsgerät zum E-Kasten. Dabei wird konditionierte Luft oder Mischluft aus dem Überdruckbereich vor dem elektrischen Heizer des Luftbehandlungsgerätes entnommen und über einen Kanal zum E-Kasten geführt.

Die Abbildung 1c) zeigt eine Überdruckschaffung durch Kanalisierung vom Fortluftkanal zum E-Kasten. Hierbei erzeugt der Fortluftventilator einen Überdruck im E-Kasten.

Die Abbildungen 1g) bis 1j zeigen weitere Varianten zur Überdruckschaffung, wobei hierbei die einzelnen Sektionen der Klimaanlage alternativ angeordnet sind.

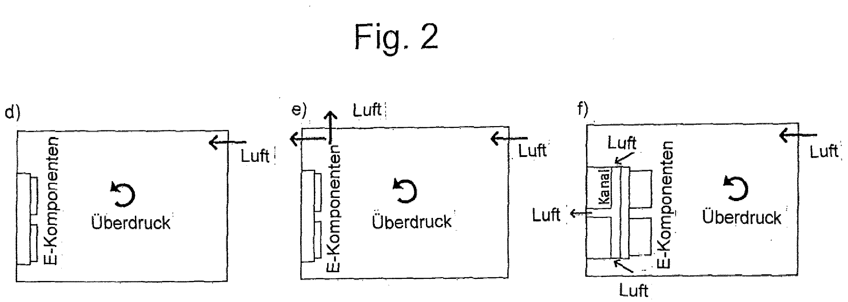

Aus Fig. 2 ist ein E-Kasten mit Überdruck im Innenraum und verschiedenen Varianten zum Ausströmen der Luft ersichtlich.

Die Abbildung 2d) zeigt einen dicht gebauten E-Kasten ohne eine gezielte Abströmung. Somit erfolgt hier kein Überströmen von Wärmequellen und dadurch auch keine Entwärmung elektrischer Komponenten. Der Überdruckaufbau wird durch eine der oben erläuterten Varianten solange durchgeführt, bis sich ein konstanter Überdruck im Rahmen der erreichten Druckdichtigkeit einstellt.

Die Abbildung 2e) zeigt moderate Luftleckageraten im E-Kasten, jedoch keine gezielte Abströmung. Der Überdruckaufbau und dessen Aufrechterhaltung werden durch Zuströmung von Luft durch eine der oben erläuterten Varianten durchgeführt. Ein Abströmen durch Spalten und Undichtigkeiten in nicht druckdichte Segmente des Klimagerätes ist möglich. Es erfolgt jedoch kein signifikantes Abströmen u.a. in die Luftbehandlungseinheit, um eine Ozonbelastung der Zuluft zu verhindern. Der Luftwechsel im E-Kasten bewirkt eine ungerichtete Entwärmung. Die Abbildung 2f) zeigt eine kanalisierte Abströmung aus dem E-Kasten und eine gezielte Entwärmung von elektrischen Komponenten. Der Überdruckaufbau und dessen Aufrechterhaltung werden auch hier durch Zuströmung von Prozessluft durch eine der oben erläuterten Varianten durchgeführt. Der Luftwechsel im E-Kasten bewirkt dadurch zusätzlich eine Entwärmung der elektrischen Komponenten. Dabei ergibt z.B. die kanalisierte Abströmung zur Abströmöffnung entlang zu kühlender elektrischer Komponenten eine gezielte Entwärmung.

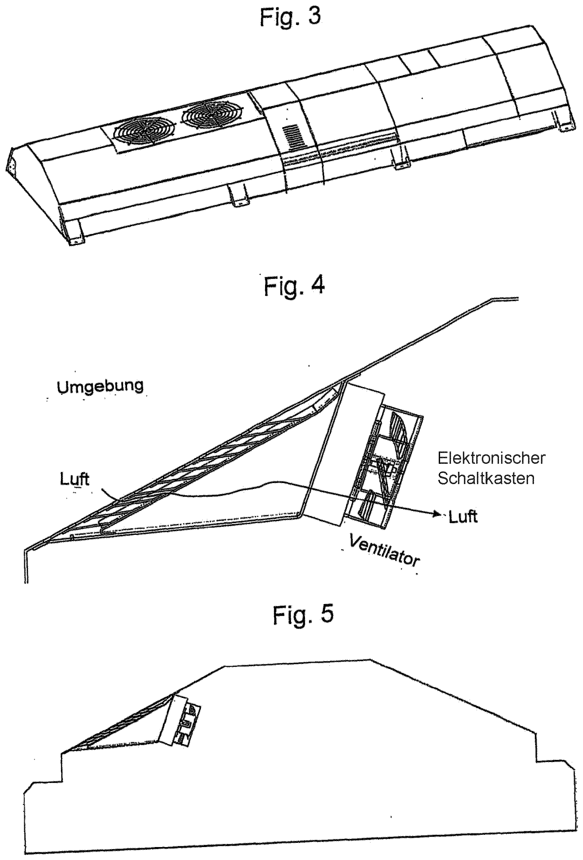

Aus Fig. 3 ist die die Anordnung eines E-Kastens als Segment eines Klimakompaktgerätes ersichtlich. Hier wird die Überdruckschaffung beispielsweise durch einen Ventilator realisiert, dessen Lufteintrittsgitter durch mehrere parallel zueinander und in einer Rechteckkontur verlaufende Striche stilisiert ist.

Dieser grundsätzliche Aufbau ist aus Fig. 4 nochmals detailliert ersichtlich, wobei hier auch der Verlauf der Luftströmung dargestellt ist. Dabei erfolgt die Überdruckschaffung für den Innenraum des E-Kastens durch Ansaugen der Umgebungsluft mit Hilfe eines separaten Ventilators. Diese Umgebungsluft wird über ein speziell ausgestaltetes Wetterschutzblech vom Ventilator angesaugt. Optional befindet sich vor dem Ventilator ein Luftfilter zur Reinigung der Umgebungsluft.

Aus Fig. 5 sind noch weitere Details ersichtlich, wobei insbesondere des Ventilators im E- Kasten mit der Schnittstelle zur Umgebung dargestellt ist.

## Patentansprüche

1. Klimaanlage für ein Fahrzeug, wobei die Klimaanlage für die Verwendung von wenigstens einem brennbaren Kältemittel konfiguriert und für eine Montage auf einem Fahrzeugdach ausgestaltet ist, umfassend:
Gerätesektionen für eine Luftbehandlung;
eine Verdichter-Einheit; und
einen elektrischen Schaltkasten; wobei
der elektrische Schaltkasten als eine vollständig geschlossene Baugruppe ausgestaltet ist und mit einer Baugruppe zur Zuführung von Luft in Wirkverbindung steht, mit der Luft aus Bereichen außerhalb der kältemittelführenden Segmente der Klimaanlage derart in den elektrischen Schaltkasten geführt wird, dass ein Überdruck im elektrischen Schaltkasten erzeugt wird, um ein Einströmen von dem wenigstens einen brennbaren Kältemittel in den elektrischen Schaltkasten zu vermeiden; und wobei
der elektrische Schaltkasten wenigstens eine Öffnung zum Wirkverbinden des elektrischen Schaltkastens mit wenigstens einer Komponente der Baugruppe zur Zuführung von Luft aufweist, wobei die Baugruppe zur Zuführung von Luft so konfiguriert ist, dass die Luft über die wenigstens eine Komponente in den elektrischen Schaltkasten zugeführt wird, um den Überdruck in dem elektrischen Schaltkasten zu erzeugen.

2. Klimaanlage nach Anspruch 1, **dadurch gekennzeichnet, dass** die wenigstens eine Komponente der Baugruppe zur Zuführung von Luft einen separaten Ventilator aufweist, der zum Erzeugen des Überdrucks im elektrischen Schaltkasten, über die wenigstens eine Öffnung im elektrischen Schaltkasten, konfiguriert ist.

3. Klimaanlage nach Anspruch 1, **dadurch gekennzeichnet, dass** die wenigstens eine Komponente der Baugruppe zur Zuführung von Luft eine Kanalstruktur aufweist, die einen Teilvolumenstrom der Zuluft in den elektrischen Schaltkasten, über die wenigstens eine Öffnung im elektrischen Schaltkasten aus einen Überdruckbereich des Zuluftbereichs der Gerätesektionen zur Luftbehandlung zuführt.

4. Klimaanlage nach Anspruch 1, **dadurch gekennzeichnet, dass** die Klimaanlage einen Fortluftventilator aufweist, wobei die Baugruppe zur Zuführung von Luft eine Kanalstruktur aufweist, die einen von dem Fortluftventilator erzeugten Teilvolumenstrom aus Fortluft über einen Fortluftkanal in den elektrischen Schaltkastenführt.

5. Klimaanlage nach Anspruch 1, **dadurch gekennzeichnet, dass** der elektrische Schaltkasten eine geschlossene Baugruppe mit wenigstens einer Öffnung für eine Entlüftung, eine Entwärmung oder für die Entlüftung und die Entwärmung der in einem Innenraum des elektrischen Schaltkastens installierten elektrischen Komponenten ausgestaltet ist.

## Claims

1. Air conditioner for a vehicle, wherein the air conditioner is configured for the use of at least one flammable refrigerant and is designed for being mounted on a vehicle roof, comprising:
device sections for an air treatment;
a compressor unit; and
an electric switch box; wherein
the electric switch box is designed as a completely closed structural unit and is operatively connected to a structural unit for supplying air, by means of which unit air from regions outside the refrigerant-carrying segments of the air conditioner is guided into the electric switch box in such a way that a positive pressure is generated inside the electric switch box, in order to avoid inflow of the at least one flammable refrigerant into the electric switch box; and wherein
the electric switch box comprises at least one opening for operatively connecting the electric switch box to at least one component of the structural unit for supplying air, wherein the structural unit for supplying air is configured in such a way that the air is supplied into the electric switch box via the at least one component in order to generate the positive pressure inside the electric switch box.

2. Air conditioner according to Claim 1, **characterized in that** the at least one component of the structural unit for supplying air comprises a separate fan which is configured for generating the positive pressure in the electric switch box via the at least one opening in the electric switch box.

3. Air conditioner according to Claim 1, **characterized in that** the at least one component of the structural unit for supplying air comprises a channel structure which supplies a partial volume flow of the supply air into the electric switch box via the at least one opening in the electric switch box from a positive pressure region of the supply air region of the device sections for air treatment.

4. Air conditioner according to Claim 1, **characterized in that** the air conditioner comprises an exhaust air fan, wherein the structural unit for supplying air comprises a channel structure which guides a partial volume flow of exhaust air generated by the exhaust air fan into the electric switch box via an exhaust air channel.

5. Air conditioner according to Claim 1, **characterized in that** the electric switch box is designed as a closed structural unit having at least one opening for venting, heat dissipation or for venting and heat dissipation of the electrical components installed in the inner space of the electric switch box.

## Revendications

1. Système de climatisation pour un véhicule, dans lequel le système de climatisation est configuré pour l'utilisation d'au moins un liquide de refroidissement combustible et est conçu pour un montage sur un toit de véhicule, comprenant :
des sections d'appareil pour un traitement de l'air ;
une unité de compresseur ; et
une boîte de commutation électrique ; dans lequel
la boîte de commutation électrique est conçue en tant qu'un module totalement fermé et est en liaison fonctionnelle avec un module pour amener de l'air, avec lequel de l'air provenant de zones à l'extérieur des segments d'acheminement de liquide de refroidissement du système d'installation est guidé de telle manière dans la boîte de commutation électrique qu'une surpression est produite dans la boîte de commutation électrique pour éviter un afflux de l'au moins un liquide de refroidissement combustible dans la boîte de commutation électrique ; et dans lequel
la boîte de commutation électrique présente au moins une ouverture destinée à relier en liaison fonctionnelle la boîte de commutation électrique à au moins un composant du module pour amener de l'air, dans lequel le module est configuré pour amener de l'air de telle sorte que l'air est amené dans la boîte de commutation électrique par l'intermédiaire de l'au moins un composant pour générer la surpression dans la boîte de commutation électrique.

2. Système de climatisation selon la revendication 1, **caractérisé en ce que** l'au moins un composant du module destiné à amener de l'air présente un ventilateur séparé, qui est configuré pour générer la surpression dans la boîte de commutation électrique, par l'intermédiaire de l'au moins une ouverture dans la boîte de commutation électrique.

3. Système de climatisation selon la revendication 1, **caractérisé en ce que** l'au moins un composant du module destiné à amener de l'air présente une structure de canal, qui amène un débit volumique partiel de l'air entrant dans la boîte de commutation électrique par l'intermédiaire de l'au moins une ouverture dans la boîte de commutation électrique depuis une zone de surpression de la zone d'air entrant des sections d'appareil pour le traitement de l'air.

4. Système de climatisation selon la revendication 1, **caractérisé en ce que** le système de climatisation présente un ventilateur d'air d'échappement, dans lequel le module destiné à amener de l'air présente une structure de canal, qui guide un débit volumique partiel d'air d'échappement généré par le ventilateur d'air d'échappement en passant par un canal d'air d'échappement dans la boîte de commutation électrique.

5. Système de climatisation selon la revendication 1, **caractérisé en ce que** la boîte de commutation électrique présente un module fermé avec au moins une ouverture et est conçue pour une aération, un refroidissement ou pour l'aération et le refroidissement des composants électriques installés dans un espace intérieur de la boîte de commutation électrique.
